# EUROPEAN PATENT APPLICATION

(11) **EP 4 521 476 A1**
(43) Date of publication of application: **12.03.2025**
(21) Application number: 23196209.3
(22) Date of filing: 08.09.2023
(51) Int. Cl.: H01M 4/04, B65H 19/10, H01M 4/66

(54) **METHOD OF PROCESSING METAL FOIL WEB MATERIAL INTO AN ELECTRODE WEB**

(71) Applicant: LG Energy Solution, Ltd., Seoul 07335 (KR)
(72) Inventor: KANG, Min Kyu, 34122 Daejeon (KR); HWANG, Dong Hyun, 34122 Daejeon (KR); KIM, Seung Yeon, 34122 Daejeon (KR); LEE, Hyun Dong, 34122 Daejeon (KR); CHO, Sung Min, 34122 Daejeon (KR)
(74) Representative: Goddar, Heinz J.

(57) **Abstract**

A method of processing metal foil web material into an electrode web, comprising the steps of operating a die coater to coat the metal foil web material with an active material layer on the metal foil web material; supplying a first portion of metal foil web material from a first supply roll to the die coater; providing a second supply roll carrying a second portion of the metal foil web material; providing an adhesive to the leading end of the second portion of the metal foil web material; applying the leading end of the second portion of the metal foil web material to a section of the first portion of the metal foil web material such that the adhesive is sandwiched between the first and second portions of the metal foil web material; and severing the first portion of metal foil web material from the first supply roll at or behind the adhesive.

## Description

### [TECHNICAL FIELD]

The present disclosure relates to a method of processing metal foil web material into an electrode web and to a machine configured for performing said method.

### [BACKGROUND]

In modern society, as portable devices such mobile phones, notebook computers, camcorder and digital camera have become popular, the development of battery technology is of great significance. In addition, chargeable/dischargeable secondary batteries have become indispensable power sources for electric vehicles (EV), hybrid electric vehicles (HEV), plug-in hybrid electric vehicles (P-HEV) and the like, in the attempt to solve air pollution, decrease carbon dioxide emissions, and the like, caused by existing combustion engine vehicles using fossil fuel. Therefore, there is a growing need for improvements of secondary batteries.

Currently commercialized secondary batteries include nickel cadmium batteries, nickel hydrogen batteries, nickel zinc batteries, and lithium secondary batteries. Among these, the lithium secondary batteries have come into the spotlight because of various beneficial aspects, for example, they hardly exhibit memory effects compared to nickel-based secondary batteries and thus may be liberally charged and discharged, and they display very low self-discharge rates and high energy density.

A secondary battery may be classified based on the shape of battery case into a cylindrical battery having an electrode assembly mounted in a cylindrical metal can, a prismatic battery having an electrode assembly mounted in a prismatic metal can, and a pouch-type battery. The pouch-type secondary battery generally accommodates an electrode assembly having a structure in which electrodes and separators are alternately arranged within a pouch-shaped case made of a laminated aluminum sheet.

Further, the secondary battery may be classified based on the structure in which a cathode and an anode are stacked with a separator being interposed between the cathode and the anode. Typically, there may be a stacked (laminated) type structure in which pluralities of cathodes and anodes, cut into predetermined unit sizes, are sequentially stacked with separators being interposed between the cathodes and the anodes, or the like. In recent years, in order to solve problems caused by the jelly-roll type electrode assembly and the stacked type electrode assembly, there has been developed a stacked/folded type electrode assembly, which is a combination of the jelly-roll type electrode assembly and the stacked type electrode assembly. Such a stacked type electrode assembly may also be referred to as an electrode stack assembly.

The electrodes, that is, the cathode and the anode, are typically formed in a process in which metal foil web material is processed into an electrode web by coating the metal foil web material with an active material layer and subsequently separating individual electrodes from the coated web of metal foil. The web material is typically provided to a processing assembly as a supply roll. In order to maximize output, is desired to operate processing assemblies with as little downtime as possible and to ascertain that the produced electrodes meet quality standards so as to minimize discharge. To this end, it is desired to switch from one supply roll to the next as efficient as possible.

KR 10-2023-0004997 A1 describes an electrode sheet connection method in which a portion of web material from a first supply roll is attached to a downstream portion from a second supply roll by meeting the edge of the first portion to the edge of the second portion so as to align them and adhering a tape onto a mutual surface of the engaging portions.

Different attachment methods for electrode foils are described in KR 10-1269482 B1, US 2012 318 462 A1 or JP 1997 0219 189 A2.

Common methods for switching from a first supply roll to a second supply roll in assemblies for processing metal foil web material into an electrode web cause significant downtime between the processing of a first portion and downstream second portion of the web material. Furthermore, the attachment of the leading portion to the downstream portion oftentimes causes a poor quality in the coating downstream of the connection, and the material of subpar quality must not be used for battery production but needs to be disposed of.

Furthermore, in conventional methods, sticky adhesive residue may gather on deflection pulleys, tensioning rollers and the like, which may cause damages to the web material being processed and requires cumbersome cleaning and downtimes, thus decreasing production efficiency.

### [DETAILED DESCRIPTION OF THE INVENTION]

### [Technical Problem]

It is an object of the present disclosure to overcome the disadvantages of the prior art, in particular to provide an improved method of processing metal foil web material into an electrode web which allows for a fast, reliable and/or efficient production, preferably of the highest quality.

### [Technical Solution]

One or more problems known from the prior art are solved by the subject-matter according to the independent claims. Particular embodiments are given by the features of the dependent claims.

Accordingly, a method of processing metal foil web material into an electrode web is provided. The electrode web may be processed further to serve as an electrode plate or the like, particular as a positive electrode plate or as a negative electrode plate. In particular, an electrode plate produced in the method of processing metal foil web material into electrode web as described hereinbelow may be formed into in a jelly-roll type electrode assembly, a stacked type electrode assembly, or a stacked/folded type electrode assembly. The method of processing metal foil web material comprises several steps.

The method of processing metal foil web material comprises the step of operating a die coater to coat the metal foil web material with an active material layer on the metal foil web material. While processing metal foil web material, the die coater may be operated continuously and/or constantly to coat an active material layer onto the metal foil web material. The method of processing metal foil web material may comprise several steps of operating one or more die coaters to coat a first and/or second surface of the metal foil web material with an active material layer. It may be preferred that the method of processing metal foil web material comprises a first step of operating a first die coater to coat a first surface of the metal foil web material with a first active material layer and a second step of operating a second die coater to coat a second surface of the metal foil web material with a second active material layer, wherein preferably the first and second active material layer may comprise or consist of the same constituents. The first and second coating step may be performed subsequently to one another. One or more drying steps may be performed directly after a respective coating step for drying and curing the active material layer. In particular, the first drying step may be performed after the first coating step, in particular before a subsequent second coating step. A second drying step may be performed after the second coating step.

The method of processing metal foil web material further contains the steps of supplying a first portion of the metal foil web material from a first supply roll to the die coater and of providing a second supply roll carrying a second portion of the metal web foil web material. As the metal foil web material is supplied from a supply roll to the die coater, it may travel along one or more intermediate components or parts, such as pulleys, particularly including at least one or more deflection pulleys and/or tensioning rollers.

The term "web material" shall be understood as a generic term to relate to a web-type material such as a film, sheet, foil, net, porous material, such as sieve, foam, and non-woven fabric, or the like. A web material has a web length dimension substantially larger than a web width dimension, wherein the latter is substantially larger than a web thickness dimension. For example, the web thickness dimension of the metal foil web material to be processed may be configured in a range between 1 µm and 100 µm, preferably between 3 µm and 30 µm, more preferably between 5 µm and 15 µm. For example, the web width dimension of the metal foil web material to be processed may be configured in a range between 1 mm and 5000 mm, preferably between 10 mm and 1000 mm, more preferably between 50 mm and 500 mm. For example, the web length dimension of the metal foil web material to be processed may be configured in a range between 10 m and 100 km, preferably between 100 m and 50 km, more preferably between 500 m and 25 km. At a typical rate of web material movement during processing, particularly during the coating step, may be in the order of magnitude of 100 m/Min. When freshly mounted on the supply roll, the web length dimension may preferably be wound around the respective supply roll. The supply from the supply roll to the die coater may preferably be moved along the web length direction. The rotary axis of the supply roll is preferably arranged in parallel with the web width direction. The radial direction of the supply roll preferably corresponds to the web thickness direction. The first and second supply roll preferably carry the same type of metal foil web material. Preferably, the supply rolls carry metal foil web material of the same thickness dimension and/or the same width dimension. It is not mandatory but may be preferred that the supply rolls carry metal foil web material of, at least initially before unwinding, the same or at least a similar web length dimension.

The method further comprises a step of providing an adhesive to the leading end of the second portion of the metal foil web material. The leading end of the metal foil web material includes the leading edge thereof as well as a part of the web material trailing the leading edge. The adhesive may be arranged at the leading edge of the second portion or at the leading end in a distance to the leading edge. The adhesive may be provided to the second portion in an adhesion area extending in the width direction and the length direction of the second portion. The adhesion area may preferably extend continuously from the first (left) lateral edge to the second (right) lateral edge. The adhesion area may have an extension in the length direction which is no larger than the extension of the metal foil web material and/or the adhesion area in the width direction. The adhesive may be provided to the second portion as a layer extending continuously across the entire width of the metal foil web material. Alternatively, the adhesive may be provided to the second portion in a pattern, preferably a regular pattern, such as a pattern including a plurality of dots, lines or the like. Preferably, a distance between the adhesive and the leading edge in the web length direction may be less than 1 m, in particular less than 10 cm or less than 1 cm. The step of providing an adhesive to the leading end of the second portion of metal foil web may be performed before or while the second supply roll is being provided. The adhesive may be provided to the leading end of the second portion of metal foil while it is completely (in its entirety) wound onto the second supply roll (before unwinding), before it is wound onto the supply roll, or after unwinding the second portion of metal foil from the second supply roll has commenced. The adhesive may for example be provided to the second portion of metal foil web material in form of a liquid or in solid form, for instance as a piece of tape. The adhesive provided to the leading end of the second portion of the metal foil web material may include a solvent, in particular a water-based solvent or as an organic solvent.

The method further comprises a step of applying the leading end of the second portion of the metal foil web material to a section of the first portion of the metal foil web material such that the adhesive is sandwiched between the first and second portions of the metal foil web material. The first and second portions are preferably applied to each other such that their respective lengthwise directions are aligned. Alternatively or additionally, it may be preferred that the respective first (left) lateral edges and/or the respective second (right) lateral edges of the first and second portions are aligned as the leading end of the second portion is applied of the first portion. The adhesive may be provided to the first portion in an attachment area extending in the width direction and the length direction of the second portion. The attachment area may preferably extend continuously from the first (left) lateral edge to the second (right) lateral edge of the second portion. The attachment area may have an extension in the length direction which is no larger than the extension of the metal foil web material and/or the attachment area in the width direction. As the leading end of the second portion is applied to the section of the first portion, the adhesive may adhere to the first and/or second portion. For example, the adhesive may comprise a liquid adhesive or an adhesive tape adhering to both the first and the second portion. The adhesion area may be as large as or larger than the attachment area.

The method of processing metal foil web material into an electrode web furthermore comprises a step of severing the first portion of metal foil web material from the first supply roll at the adhesive, in particular in the attachment area, or behind the adhesive, in particular downstream of the attachment area. The severing step is preferably only conducted with respect to the first portion. In particular, the severing step leaves the second portion of the metal foil web material intact.

The leading end of the metal foil web material may be the radially outermost part of the metal foil web material on the respective supply roll before it is unwound from said roll. The term "leading end" may generally refer to a foremost part of web material as it travels through a machine. As the second portion travels, the second portion follows the leading end of the metal foil web material through a processing machine. In particular, the leading edge of the leading end is the first part of the second portion of the metal foil material which comes into contact with components or parts of a machine processing the metal foil web while the method is performed, particularly before other parts of the second portion come into contact with those components or parts. In view of the processing direction in a machine configured for performing the method, the leading end can be referred to as a forward end of the second portion of the metal foil web material. The leading edge forms the border of the leading end. The entire second portion of metal foil web material may trail behind the leading edge during the method. In particular, the machine includes a first die coater to coat a first surface of the metal foil web material with a first active material layer and a second die coater configured to coat a second surface of the metal foil web material with a second active material layer.

Advantageously, the method as described above allows to achieve a particularly strong bond between portions of metal foil web material which to be coated in a die coater. The method allows for rapid attachment of a second portion to a first portion for the replacement thereof, so as to minimize downtime for switching from one supply to another. By attaching first and second portions via adhesive sandwiched between the portions of web material, the amount of adhesive which may soil parts of the assembly, such as deflection pulleys, tensioning rollers and the like, is significantly reduced.

As the supply from the first supply roll nears its end, a switch (switchover) to metal foil web material of the second supply roll may be performed as described herein and the second supply roll may thereby become a (new) first supply roll. During or after performing the operation to switch from the first supply roll to the second supply roll, the first supply roll may be discarded and the second supply roll may put in the place of the (now: former) first supply roll. For example, the second supply roll may be moved along a rotary path into the position of the (former) first supply roll, to act as (new) first supply roll, in particular until the metal foil web material from the (former: second) supply roll is almost completely unwound. The second supply roll may be pivoted from a supply position where it may be arranged prior or even during attachment of the second portion of web material to the first portion, into an operating position where the supply roll may be kept for the majority of the duration of the process of coating a metal foil web material with an active material coating and/or between switching supply rolls.

A preferred embodiment of the method according to the present disclosure further comprises the step of providing the adhesive comprising a first section proximal to the leading end and the second section distal to the leading end of the first portion of the metal foil web material. Preferably, the severing may be performed in the adhesion area and/or attachment area defined by the second section. Alternatively, the severing may be performed downstream with respect to the second section in the proximity of the second section or at the downstream end of the second section. The adhesive may have different properties in the first section in comparison to the second section, in particular regarding attachment to the first portion. The severing is performed at the second section. It may be preferred that the severing is performed such that the first portion of the metal foil web material is provided with a trailing end partially, or, preferably, completely situated within the second section. In particular, the adhesive is provided such that the second section trails behind the first section. It may be preferred that adhesive provided in a first section in the proximity of the leading end or on the leading end, and the second section of the adhesive is downstream of the leading end. The first section has a first length in the lengthwise direction of the web material, and the second section has a second length. The first length may be substantially equal or equal to the second length. In particular, the second length may be longer than the first length. Alternatively, the first length may be longer than the second length. In some embodiments, the second section is longer than the first section. In particular, the length of the second section is no larger than the width of the metal foil web material.

In a preferred further development, a gap is provided separating the section from the second section. The gap preferably refers to an area on the first and/or a second portion of metal foil web material free of any adhesive. The gap may be provided to the second portion extending in the width direction and the length direction of the second portion. It may be preferred that the gap is provided by providing the adhesive to the leading end of the second portion of the mental web metal foil web material such that the first section of the adhesive is provided in the immediate proximity of the leading end or on the leading end, and the second section of the adhesive is provided downstream of the leading end in a distance from the first section defining the gap. The gap may preferably extend continuously from the first (left) lateral edge to the second (right) lateral edge of the first and/or second portion. The gap may have an extension in the length direction which is no larger than the extension of the metal foil web material in the width direction. In particular, the gap may extend in the lengthwise direction of the web material for a gap length at least as long as the first section and/or at least as long as the second section. Alternatively, the gap may extend in the lengthwise direction of the web material for a gap length no longer than the first section and/or no longer than as the second section. The gap length may be smaller than both the first and second sections. It may be preferred that the gap extends in the lengthwise direction of the web material for a gap length at least as long as the first section and no longer than as the second section. The gap may be provided between the first and the second portion extending continuously across the entire width of the metal foil web material.

In another further development, which may be combined with previous one, the adhesive force for holding the first portion provided by the adhesive is weaker in the second section than it is in the first section. The adhesive force in the first section may be in particular be larger than the adhesive force in the second section, preferably at least 2 times as large, or preferably at least 10 times as large as the adhesive force in the second section. It may be preferred that the adhesive force attaching the leading end of the second portion of metal foil web material to the first portion of metal for web material, where most of the pulling forces are transferred, are particularly strong. It may be preferred that the adhesive force attaching the trailing end or "tail" of the first portion of metal foil web material to the second portion of metal for web material, with which the trailing end or tail may be secured so as to be hindered from flapping, are rather weak. The adhesive force in the first section is preferably substantially stronger than the adhesive force in the second section. The adhesive force provided by the adhesive may be in the range of 5 gf/25mm to 2000 gf/25mm, preferably in the range of 10 gf/25mm to 1000 gf/25mm. The adhesive force in the first section may be no less than 750 gf/25 mm, in particular no less than 850 gf/25mm, preferably no less than 1000 gf/25mm. The adhesive force in the second section may be no more than 200 gf/25 mm, in particular no more than 100 gf/25mm, preferably no more than 50 gf/ 25mm. In a particularly preferred embodiment, the adhesive force in the second section may be 20 gf/25 mm and the adhesive point in the first section may be at least 900 gf/25 mm. The provision of the adhesive may include the provision of a first adhesive means, such as a first double sided adhesive tape, in the first section, and a second adhesive means, such as a second double sided adhesive tape, in the second section. By providing the second section with a relatively weak adhesive force, soiling of deflection pulleys, tensioning rollers and the like due to superfluous adhesive exposed at or behind the trailing edge of the first portion, can be minimized. The adhesive force may be determined according to EN 1939:2003 or ASTM D3330.

According to some embodiments, the adhesive is provided as a double-sided tape. In such embodiments where the adhesive includes distinct sections having different adhesion properties, a first double-sided tape may be provided in the first section and a second double sided tape may be provided in the second section. The double-sided tape may include a first sticky layer for attachment to the first portion of the metal foil web material and a second sticky layer for attachment to the second portion of the metal foil web material. Double-sided tape may furthermore include a base layer sandwiched between the first sticky layer and the second sticky layer. The adhesive properties of the first and second sticky layer of the double-sided tape may be the same or different. In particular, adhesive properties of the first and second sticky layer of the double-sided tape provided in the first section may be the same. Alternatively or additionally, adhesive properties of the first and second sticky layer of the double-sided tape provided in the second section may be the different, in particular the adhesive force of the second sticky layer may be less than that of the first sticky layer, preferably less than half, more preferably less than one tenth. The use of double-sided tape as the adhesive has been shown to be advantageous in that the tape can be applied in a very simple and yet precise manner. The use of adhesive tape may be advantageous to avoid soiling of deflection pulleys, tensioning rollers and the like as the location and amount of adhesive is well defined.

The adhesive may be provided to the second portion having a thickness smaller than a width of a slot of the die coater through which the metal foil web material travels. It may be preferred to select the adhesive, in particular the double-side tape, such that the thickness of the compound metal foil web material in the attachment/adhesion region, where the first and second portions of the metal foil web material overlap, is smaller than a slot of the die coater through which slot the metal foil web material travels during the coating of the metal foil web material through said coater. It may be preferred that the thickness of the compound metal foil material containing the adhesive sandwiched between the first and second portions of the metal foil web material is less than a layer of active material coated onto one side of the metal foil web material in a coater operating step.

In some embodiments, the severing step and the application of the leading end of the second portion to the first portion are performed using a combined stamping and cutting tool. The severing step and the application step may be performed simultaneously. The combined tool may be used to urge the first portion against the second portion with the adhesive arranged therebetween, and to sever the second portion in the attachment area. The combined tool may include a cutting tool configured to connect the first portion of metal foil web material and a stamping tool to push the first portion against the adhesive arranged on the second portion. By performing an action using a combined tool to realize the attachment step and the severing step, the metal foil web material can be processed particularly quickly and reliably. Using a combined tool allows to cut the second portion clean and precisely according to a desired relation to the adhesive, in particular the attachment area.

In some embodiments, the coater is operated to continuously to coat active material onto the metal foil web material. In particular, the coater is operated to continuously coat active material onto the metal foil web material as the metal foil web material travels through the coater. In particular, the coater may be operated continuously while the metal foil web material supply is switched from the first supply roll to the second supply roll. Preferably, the coater is operated continuously and downstream of a point in a processing assembly where the leading end of the second portion of metal foil web material is applied to a section of the first portion of the metal foil web material. The coater may be operated upstream of a device like an oven for fixing the freshly coated active material coating onto the metal foil web material. The method may include the operation of multiple die coaters to coat the metal foil web material with an active material layer wherein a first die coater may be operated to coat a first side of the web material and a second coater may be operated to coat a second side of the web material opposite to the first side. Multiple die coaters may be operated continuously and simultaneously to coat active material layers onto the web material.

A first die coater may be operated to coat a first side of the metal foil web material, preferably the side of the metal foil web material on which the trailing end of the first portion formed by severing is arranged, wherein the first die coater is arranged downstream of the place where the second portion is attached to the first portion. A first device, such as a first oven, may be operated to fix the first active material layer to the metal foil web material, and arranged downstream of the first die coater, preferably immediately downstream of the first die coater. The first oven or the like is preferably arranged between the first die coater and a second die coater in the travel direction of the metal foil web material.

A second die coater may be operated to coat a second side of the metal foil web material, preferably the side of the metal foil web material on which the leading end of the second portion is arranged, wherein the second die coater is arranged downstream of the place where the second portion is attached to the first portion. A second device, such as a second oven, may be operated to fix the second active material layer to the metal foil web material, and arranged downstream of the second die coater, preferably immediately downstream of the second die coater.

It may be preferred that the second side of the metal foil web material is coated with the active material after the first side of the metal foil web material is coated with the active material. The second die coater may be arranged downstream of the first die coater.

In some embodiments, the active material is coated over the adhesive, in particular directly onto the adhesive, on the first side of the metal foil web material (where the trailing end of the first portion formed by severing is arranged). The second portion may be cut such that a trailing end of the second portion is formed above the adhesion area. By coating an active material layer over the adhesive, in particular on the first side of the metal foil and/or in particular directly over the adhesive, in particular a second section of the adhesive, holding the trailing edge of the first portion, said trailing edge is securely held between the adhesive and the active material. It may be preferred to coat the opposite side, where the leading end of the second portion is firmly adhered to the second portion, subsequently, to achieve a particularly clean and reliable attachment. By providing an active material coating onto the adhesive soon after severing the first portion and thereby exposing said adhesive, soiling of assembly components, particularly deflection pulleys, tensioning rollers and the like, downstream of the first die coater can be minimized or even prevented.

In some embodiments, the first and second supply roll supply the same metal foil web material. In particular, the first and second supply roll supply of metal foil web material is provided comprising a copper alloy. Alternatively or additionally, the first and second supply roll supply metal foil web material is provided comprising of an aluminum alloy. Alternatively, the first and second supply roll supply metal foil web material is provided consisting of an aluminum alloy or a copper alloy.

According to some embodiments, the severing step is performed along a severing line crosswise, in particular at an angle between 60° and 120°, preferably at an angle between 80° and 100°, through the first portion with respect to the travel direction of the metal foil web material. More particularly, the severing line may be perpendicular or approximately perpendicular, through the first portion with respect to the travel direction of the metal foil web material.

In particular, the severing step may form a serrated edge along the trailing end of the first portion. The serrations may be formed as a pattern of angles, particularly acute angles, pointing in the downstream direction. By forming a serrated edge along the trailing end of the first portion, a transition from the first portion may be improved such that tears in the foil or active material layer may be avoided.

In some embodiments, the adhesive is provided to the side of the second portion of the metal foil web material facing radially outward on the second supply roll. The adhesive may be provided onto an outer circumference of the second supply roll before or after the roll is provided to the processing assembly. The adhesive is provided to the second roll before it is applied to the first portion. The adhesive is preferably provided to the outside surface of the second roll. The adhesive may preferably be provided to the second roll before the metal foil web material is unwound from the second supply roll.

In some embodiments, the adhesive is applied to the side of the first portion of the metal foil web material facing radially inward on the first supply roll. Alternatively, the adhesive may be applied to the side of the first portion of the metal foil web material facing radially outward on the first supply roll. The adhesive may preferably be attached to the first portion of metal foil web material after it is unwound from the first supply roll. Preferably, the adhesive is applied to a section of the first portion of metal foil web material closer to the trailing end than the leading end of the first portion attached to the first supply roll. The adhesive may be applied to a section of the first portion of metal foil web material less than 1 km, preferably less than 500 m, more preferably less than 250 m or less than 100 m, from the trailing end of the second portion attached to the first supply roll. The adhesive and second portion of the web material is preferably attached to a section of the first portion of the web material shortly before the supply from the first supply roll is empty.

In a preferred embodiment of the method of the present disclosure, subsequently to coating the active material layer onto the metal foil web material, a part of the electrode web containing the adhesive is separated from the parts of the electrode web designated to be used as electrodes, wherein the part includes the adhesive and no more than 15000 mm, in particular no more than 1500 mm, of metal foil web material trailing behind the adhesive, wherein that part is designated to be disposed of. The length of the web to be disposed of can be minimized because the disturbance to the coating caused by the switching from the first supply roll to the second supply roll is minimized, and only little affected material of the area in which the attachment is manufactured and a small distance downstream thereof is removed. By using the method as described herein, the disposal of metal foil web material coated with an active material layer can be minimized, thus leading to a more efficient production method.

Furthermore, the invention relates to a machine configured for processing metal foil web material into an electrode web according to the method as described above. The machine may in particular comprise at least one first support for a first supply, in particular a first supply roll, of metal foil web material and a second support for a second supply, in particular a second supply roll, of metal foil web material. The machine in particular comprises a device configured for providing an adhesive, in particular to the leading end of the second portion of the metal foil web material, in particular in a position of the electrode web material in the second supply, preferably on the second supply roll. The machine may include a device configured for attaching the first portion of the metal foil web material to the second portion of the metal foil web material. The machine may furthermore comprise a cutting device configured for severing the end of the first portion of the metal foil web material so as to form a trailing edge of the first portion. It may be preferred that the machine comprises a combined device for cutting and attaching. The combined cutting/attachment tool may include a common actor, such as an electromotor or a piston actuator, for providing a cutting force to sever the first portion so as to form a trailing edge and an attachment force urging the first and second portions of metal foil web material against the adhesive from opposite sides. Additionally, the machine may comprise winding means and/or driving means configured to drive the metal foil web material. The machine may comprise multiple parts, such as deflection pulleys, tensioning rollers and the like.

Batteries generally include two electrodes of opposite polarity, namely an anode and a cathode. The electrodes are arranged within a mutual container alongside a separator. The separator divides the container such that the anode and the cathode do not come into immediate contact with one another so as to avoid a short circuit. Furthermore, the mutual container is filled with an electrolyte solution, which allows ions to pass from the cathode to the anode, to allow for a chemical reaction to release electrical energy. The electrodes of the battery may each comprise a respective foil. The foil may comprise or consist of an electrically conductive material. In particular, the foil may consist of or comprise a metal, or a metal alloy, comprising or consisting for example of aluminum or copper. It may be preferred that at least one electrode of the battery is realized as a foil coated with an active electrode material (short: active material).

For example, an electrode configured to act as an anode may be provided with an active material layer configured for receiving and/or storing, preferably releasably storing, ions. An active material, in particular of an anode, may include graphite as its main component. An electrode configured to act as a cathode may be equipped with an active material configured to release ions. The active material, in particular for a cathode, may comprise or consist of metal oxide, such as a lithium oxide. The active material may for example include or consist of LCO (LiCoO₂), NCM (Li(NiCoMn)O₂), NCA (Li(NiCoAl)O₂), LMO (LiMn₂O) and/or LFP (LiFePO₄). The active material may include conductive additives, binder, filler and other components (active material mixture). An active cathode material may be configured to be replenishable. The process of releasing ions from the cathode active material and received of ions by the anode active material may be referred to as discharging. A process of releasing ions from an anode active material and replenishing the cathode active material with the ion may commonly be referred to as charging or recharging. The active materials used in the electrodes of a battery are considered essential for determining properties of a battery such as its capacity, voltage and memory effect.

In the present disclosure, a positive electrode active material coated on a positive electrode plate and a negative electrode active material coated on a negative electrode plate may include any known active material in the technical field pertaining to the present disclosure without limitation.

In an example, the positive electrode active material may include an alkali metal compound represented by formula A[AₓM_{y}]O_{2+z} (A includes at least one of Li, Na or K; M includes at least one selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; the stoichiometric coefficients x, y and z are selected to keep the compound electrically neutral).

In another example, the positive electrode active material may be an alkali metal compound xLiM¹O₂-(1-x)Li₂M²O₃ (M¹ includes at least one element having an average trivalent oxidation state; M² includes at least one element having an average tetravalent oxidation state; 0 ≤ x ≤ 1) disclosed by US6,677,082 and US6,680,143.

In still another example, the positive electrode active material may be lithium metal phosphate represented by formula LiₐM¹ₓFe₁₋ₓM²_{y}P_{1-y}M³_{z}O_{4-z} (M¹ includes at least one selected from Ti, Si, Mn, Co, Fe, V, Cr, Mo, Ni, Nd, Al, Mg and Al; M² includes at least one selected from Ti, Si, Mn, Co, Fe, V, Cr, Mo, Ni, Nd, Al, Mg, Al, As, Sb, Si, Ge, V and S; M³ includes a halogen group element optionally including F; 0 < a ≤ 2, 0 ≤ x ≤ 1, 0 ≤ y < 1, 0 ≤ z < 1; the stoichiometric coefficients a, x, y and z are selected to keep the compound electrically neutral), or Li₃M₂(PO₄)₃ [M includes at least one selected from Ti, Si, Mn, Fe, Co, V, Cr, Mo, Ni, Al, Mg and Al].

Preferably, the positive electrode active material may include primary particles and/or secondary particles formed by agglomeration of the primary particles.

In an example, the negative electrode active material may include a carbon material, lithium metal or a lithium metal compound, silicon or a silicon compound, tin or a tin compound. Metal oxide having the potential of less than 2V such as TiO₂ and SnO₂ may be used as the negative electrode active material. The carbon material may include low crystalline carbon and high crystalline carbon.

However, the problem to be solved by the embodiments of the present disclosure is not limited to the above-described problems, and can be variously expanded within the scope of the technical idea included in the present disclosure.

### [Advantageous Effects]

According to the embodiments, switching from a first supply to a second supply in a machine and process for manufacturing electrode plates in a web like manner, can be rendered more reliable. According to the embodiments, defects in the vicinity of the adhesive attaching a leading first portion to a trailing second portion, are less likely to appear and less severe. Switching from a first supply to a second supply can be done faster. The production method can be operated in a continuous manner without having to pause for switching from one supply to another. According to the embodiments, switching from a first supply to a second supply in a machine and process for manufacturing electrode plates in a web like manner, can be rendered more efficient. According to the embodiments, little to no cleaning of adhesive from machine components is required.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a machine performing a method of processing metal foil web material into an electrode web;
Fig. 2 is a detailed view of a composite tool in the machine of Fig. 1;
Fig. 3 is a schematic view of a second supply roll according to a first embodiment;
Fig. 4 is a schematic illustration of a metal foil web material comprising a first portion and a second portion from the second supply roll according to Fig. 3;
Fig. 5 is a schematic view of a second supply roll according to a second embodiment;
Fig. 6 is a schematic illustration of a metal foil web material comprising a first portion and a second portion from the second supply roll according to Fig. 5;
Fig. 7 is a schematic view of a second supply roll according to a third embodiment;
Fig. 8 is a schematic illustration of a metal foil web material comprising a first portion and a second portion from the second supply roll according to Fig. 7; and
Fig. 9 is another schematic illustration of a metal foil web material comprising a first portion and a second portion from the second supply roll according to Fig. 7.

### [DETAILED DESCRIPTION OF THE EMBODIMENTS]

Hereinafter, various embodiments of the present disclosure will be described in detail with reference to the accompanying drawings so that those skilled in the art can easily carry them out. The present disclosure can be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity. Meanwhile, similarly to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated. Throughout the specification, unless stated otherwise, each element may be singular or plural.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Throughout the specification, "A and/or B" refers to either A or B or both A and B unless expressly stated otherwise, and "C to D" refers to C or greater and D or smaller unless expressly stated otherwise.

Hereinafter, the method according to an embodiment of the present disclosure will be described with the aid of an exemplary machine for performing the method and the product of such a method.

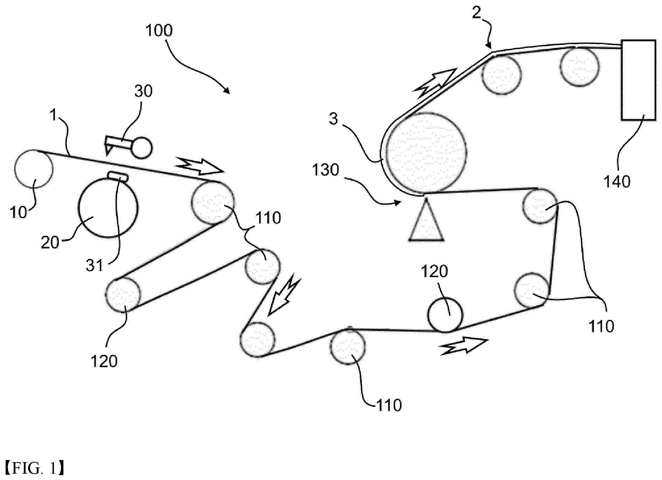

For illustrative purposes, a machine 100 is shown in figure 1 which is configured to perform a process of processing metal foil web material 1 into an electrode web 2. The metal foil web material 1 typically has a thickness of only a few µm, a width of several dm and a length which may reach one or more km. The metal foil web material 1 is provided on a supply roll 10 or 20 and transported through the machine 100 in accordance with the transport direction indicated with arrows. Inside of the machine 100, the metal foil web material 1 travels along a multitude of deflection pulleys 110 and tensioning rollers 120. Some pulleys may be driven so as to exert a pulling force onto the metal foil web material 1 while some may idle. Tensioning rollers 120 are configured to press laterally against the traveling metal foil web material 1 so as to vary the travel path in order to allow for slight inconsistencies in the traveling velocity or elasticity. The metal foil web material 1 is run through a die coater 130 which is configured and operated to supply the metal foil web material with an active material layer 3, thus forming an electrode web 2. Downstream of the die coater 130, an oven 140 is provided for curing the active material layer 3 to stabilize the electrode web 2.

In the schematic illustration of the machine 100 shown in Fig. 1, only one die coater 130 and the subsequent oven 140 are shown, coating only a first side of the metal foil web material 1. It may be preferred that the metal foil web material 1 is afterwards fed through a second die coater and subsequent second oven for coating the opposite, second side of the metal foil web material so as to produce an electrode web supplied with an active material layer on both sides of the metal foil web material (not shown). Downstream of the oven or ovens, one or more separation devices may be provided for cutting individual sheets from the electrode web 2 (not shown). The separation devices may be operated to produce individual electrode sheets to be used in batteries. One or more separation devices may be operated to sever parts of subpar quality from the electrode web, for instance parts were an adhesive 31 is sandwiched between a first portion 11 and a second portion 21 of the metal foil web material 1.

Before the machine 100 runs out of the continuing supply of the metal foil web material 1 delivered from the first supply roll 10, a second supply roll 20 is provided. The second supply roll 20 is provided with an adhesive 31 and the leading end 22 of the portion 21 of the metal foil web material 1 wound thereon. In order to switch the supply of metal foil web material 1 from the first supply roll 10 to the second supply roll 20, the adhesive 31 is applied to the first portion 11 of metal foil web material 1, which comes from the first supply roll 10, to attach a second portion 21 of metal foil web material 1 coming from the second supply roll 20. When the leading end 22 second portion 21 is attached to a central section of the first portion 11 far from the end of the first portion 11 connected to a core of the first supply roll or the like. After attaching the second portion 21 to the first portion 11, a severing tool is used to cut the first portion 11 in order to form a trailing edge 19 of the first portion 11 in the vicinity of the adhesive 31. The adhesive 31 helps to form a continuous metal foil web material 1 from the first portion 11 and the second portion 21 which is to be supplied to the die coater 130 in order to be processed into an electrode web 2.

It is desired to maintain a continuous delivery of the metal foil web material 1 to be processed into an electrode web 2. The continuous delivery of the metal foil web material 1 to the die coater 130 and components downstream thereof shall not be interrupted. A supply switch must therefore be executed before the first supply roll 10 runs out of metal foil web material 1. In order to avoid any process interruptions, the second portion 21 coming from a fresh second supply roll 20 is adhered to the first portion 11 while the first portion 11 is being delivered from the first supply roll 10 to the die coater 130 so that a joint section of the continuous metal foil web material 1 contains metal foil web material 1 from both the first portion 11 and the second portion 12. The joint section contains two layers of metal foil web material 1 and an intermediate adhesive 31 and can therefore not serve as a basis for a high quality electrode after having been covered with the active material 3. In order to minimize the joint section, the first portion 11 is severed as soon as possible after attaching the second portion 21 and as close as possible to the adhesive 31, taking into account that a reliable adhesion must be produced. In some embodiments, the trailing end 19 of the first portion 11 may be arranged downstream with respect to the adhesive 31. It may, however, be preferred that the trailing end 19 of the first portion 11 is arranged in an adhesion area defined by the presence of adhesive 31 on the second portion 21.

Due to the forces acting onto the metal foil web material 1 while traveling through the machine 100 and especially in case the first portion 11 is severed in the adhesion area covered by adhesive 31, some parts of the machine 100, such as deflection pulleys 110 or tensioning rollers 120, may be exposed to the adhesive 31 which may leave residue. If the adhesive residue thereof causes the metal foil web material 1 to stick to a part of the machine, this may cause damage to the web material 1 or the machine and interrupt the production process. In order to avoid sticking of the adhesive to components of the machine, it was attempted to reduce the number of machine parts between the die coater 130 and he supply rolls 10, 20.
It is generally preferred that the die coater 130 (in case of a machine comprising multiple die coaters 130: the first die coater through which the web travels when coming from the supply), is operated to first coat the side of the metal foil web material 1 on which the trailing end 19 of the first portion 11 formed by severing is arranged.

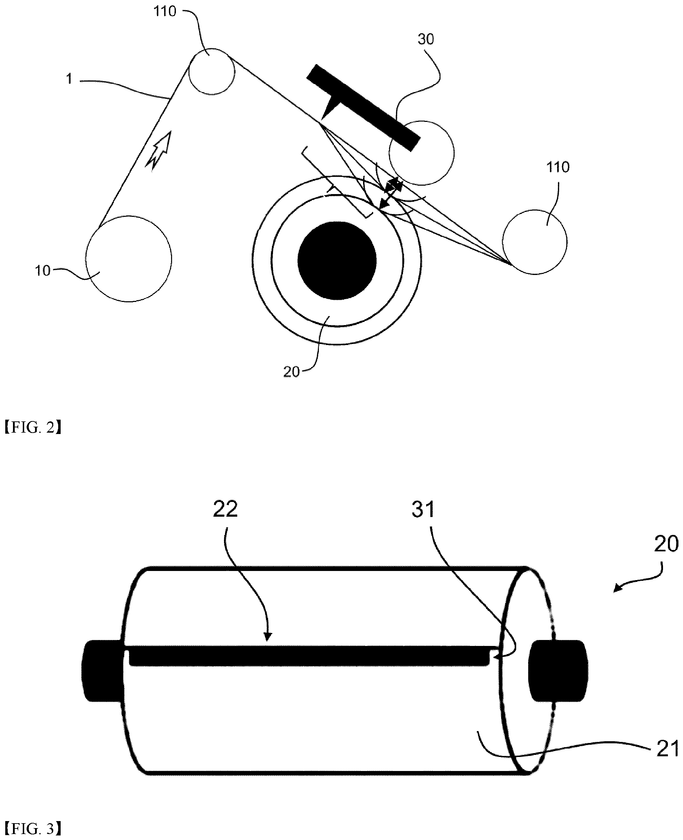

In some embodiments, a tail of the first portion 11 trails behind an attachment section to cover the adhesive 31. In the embodiment described hereinbelow in conjunction with Fig. 3, the trailing end 19 is loosely connected to the second portion (in the manner of a tail or flap) through the adhesive 31 which attaches the second portion 21 to an attachment section of the first portion 11 distanced from the trailing edge 19. It may sometimes be desired to avoid the presence of such a tail like portion of the first portion 11. Metal foil web materials 1 having a tail like trailing edge 19 show an increased risk of experiencing damage within the die coater 130 which is believed to result from inadvertent misalignment of the tail.

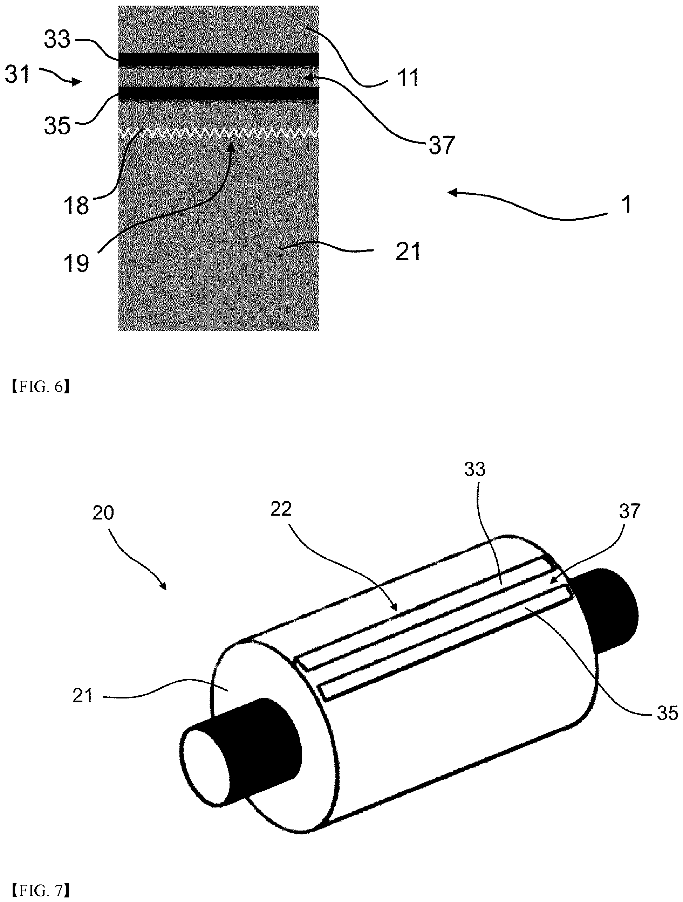

In some embodiments, particular such embodiments where the first portion 11 is severed so as to form the trailing end 19 in the adhesive area, the adhesive 31 provided to the second portion 21 of the metal foil web material 1 is provided with a strong adhesive force in a first section 33 and a week adhesive force in a second section 35. Such embodiments are described hereinbelow, for example in conjunction with Fig. 7. In such embodiments where the trailing end 19 of the first portion 11 is formed in the adhesive area, it may be preferred to form the trailing end 19 inside of the second section 35 of the adhesive 31. Thus, the adhesive 31 provides a strong adhesion force in the first section 33 for holding the first and second portions 11, 21 firmly together as the metal foil web material 1 is drawn through the machine 100, but the adhesive 31 displaying a strong adhesive force 31 does not become exposed from the first portion 11.

The second section 35 trails behind the first section 33. In the second section 35, the adhesive force of the adhesive 31 may be significantly weaker than in the first section 33. The week adhesive force in the second section 35 may be so little that, in itself, it would not suffice to provide a reliable attachment of the first and second portions 11, 21 in view of the pulling forces experienced by the metal foil web material 1 in the machine 100. The weak adhesive force of the second section 35 may be configured to fix the trailing end 19 for the first portion 11 to the second portion 21. Adhesive having only comparatively weak adhesion force was found to leave little to no residue when being exposed to machine parts, and even when residue of weak adhesive was found, it did not pose a notable risk to the process.

Fig. 2 shows a detailed view of the combined tool 30 used in the illustrated embodiment to urge the first portion 11 against the adhesive 31 on the second portion 21 and to sever the first portion 11. The skilled person understands that instead of the illustrated combined tool 30, separator tools could be provided, for example a first tool for stamping and a second tool for cutting. The use of a combined tool 30 is advantageous in that the synchronization of attaching the first portion 11 to the second portion 21 and cutting the trailing end 19 of the first portion 11 can be achieved in a particularly simple and reliable manner. By using a combined tool for stamping and severing, the distance between the point of attachment and the point of severing can be defined with little tolerance.

The tool 30 includes a stamping part configured to urge the first portion 11 against the adhesion section of the second portion 21 covered with the adhesive 31. The tool 30 is preferably configured to be movable over distance that may be a set according to the diameter of the second supply roll 20 so that the same tool 30 may be used regardless of whether the second supply roll 20 has a relatively small or a relatively large diameter, as indicated in Fig. 2.

The cutter of the tool 30 is configured to sever the second portion 21 of the metal foil web material 1 at a position trailing behind the first section 21 of the adhesion area where the second portion 21 is applied with the adhesive 31 by means of the stamp. The extension of the adhesive section in the traveling direction or lengthwise direction of the metal foil web material one can be set in accordance with effective the distance between the cutter and the stamp of the combined tool 30, or the adhesive 31 may be supplied in a lengthwise dimension sufficient to allow for different effective cutting distances.

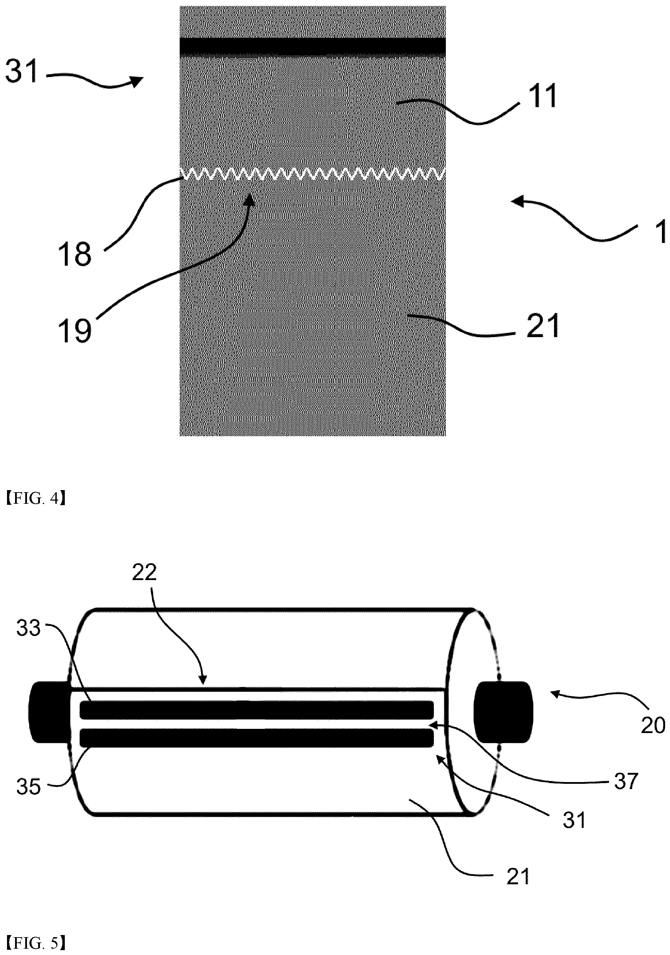

Fig. 3 is a schematic view of second supply roll 20 according to a first embodiment and Fig. 4 is a schematic illustration of a metal foil web material 1 comprising the first portion 11 and the second portion 21 from the second supply roll 20 according to Fig. 3. The (second) supply roll 20 carries a (second) portion 21 of the of the metal foil web material 1. The supply roll 20 is a wound up roll of metal foil web material 1. The metal of the metal foil material 1 may for example be copper, a copper alloy, aluminum or an aluminum alloy. The metal foil web material 1 has a predefined web length. The thickness of the metal foil web material 1 in the radial direction and its width in the axial direction are preferably constant for the entire web length.

The leading edge 22 of the second portion 21 extends in in the axial direction of the roll 20 along a straight line parallel to the roll's axis of rotation. Adhesive 31 is supplied to the second portion 21 in the immediate vicinity of the leading edge 22. The adhesive area defined by the adhesive 31 arranged on the outer circumference of the second supply roll 20 starts at the leading edge. The adhesive 31 extends over almost the entire width of the metal foil web material 1. Only a small border region of the metal foil web material 1 at the lateral edges is left fee of the adhesive. The border region may be no larger than 1 cm, in particular no larger than 5 mm or no larger than 1 mm on one or both lateral edges. The adhesive area forms a uniform layer on top of the metal foil web material 1. The adhesive 31 may comprise adjacent sections of different adhesive properties, or consist of a single section of constant adhesive properties. The adhesive 31 covers an adhesion area on the second portion 21 having a length in the longitudinal direction of the web which is larger than the adhesive's thickness and may cover 1 cm or more.

Fig. 4 shows a section of the metal foil web material 1 formed by attaching the second portion 21 provided from the roll 20 described above with respect to Fig. 3 to a first portion 11 of metal foil web material 1. The adhesive 31 attaching the first and second portions 11, 21 is arranged at the leading edge of the second portion. The trailing end 19 of the first portion is distanced from the adhesive 31. The trailing end 19 is formed along a straight line essentially perpendicular with respect to the lateral edges of the metal foil web material 1. A serrated edge 18 is formed on the trailing end 19.

Fig. 5 is a schematic view of second supply roll 20 according to a first embodiment and Fig. 6 is a schematic illustration of a metal foil web material 1 comprising a first portion 11 and the second portion 21 from the second supply roll 20 according to Fig. 5.

The embodiment of the second supply roll 20 shown in Fig. 5 differs from the one described above in the arrangement of the adhesive 31. The adhesive 31 is supplied to the second portion 21 and a first section 33 close to the leading end 22 of the second portion 21 and a second section 35 further away from the leading end 22. Optionally, a gap 37 may be provided between the first section 33 and the second section 35. The first section 33, the second section 35 and, optionally, the gap 37 may extend in a straight linear path crosswise, in particular perpendicular, with respect to the lateral edges of the metal foil web material 1. The adhesive 31 may be attached to the second portion 21 at a small distance in the lengthwise direction from the leading end 22. The leading end 22, the first section 33, the second section 35 and, optionally, the gap 37, may be arranged parallel to the leading end 22.

In the example shown in Fig. 6, the second portion 21 according to Fig. 5 is connected to a first portion 11 of metal foil web material 1. The adhesive 31 attaching the first and second portions 11, 21 is arranged near the leading edge of the second portion. The trailing end 19 of the first portion is distanced from the adhesive 31, behind the second section 35 of adhesive. The trailing end 19 is formed along a straight line essentially perpendicular with respect to the lateral edges of the metal foil web material 1. A serrated edge 18 is formed on the trailing end 19.

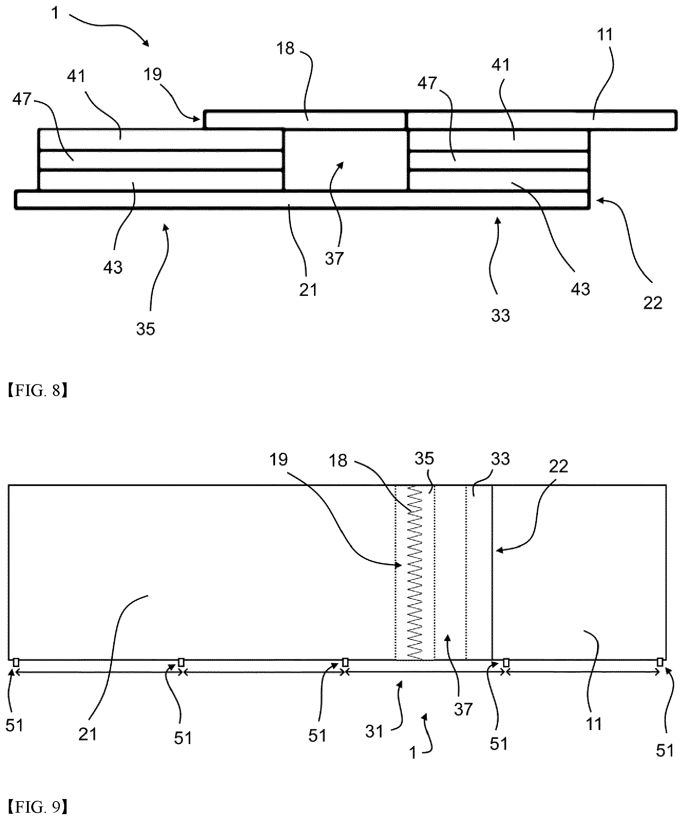

Fig. 7 is a schematic view of second supply roll 20 according to a first embodiment and Figs. 8 and 9 are schematic illustrations of a metal foil web material 1 comprising the first portion 11 and the second portion 21 from the second supply roll 20 according to Fig. 7.

The embodiment of the second supply roll 20 shown in Fig. 7 differs to the above-mentioned embodiment only in that the adhesive 31 is flush with the leading end 22. The first and second sections 33, 35 of adhesive may have the same adhesive force for attaching the first portion 11, or, preferably, the first section 33 has a substantially stronger adhesion force than the trailing second section 35. As indicated in the illustration, the second section 35 and the first section 33 may be of the same size or substantially the same size. Alternatively, the second section 35 may have a shorter longer longitudinal extension in comparison with the longitudinal extension of the first section 33. Fig. 8 shows the second section 35 having a longer lengthwise extension than that of the first section 33. The height of the adhesive 31 is preferably constant, in particular in such embodiments wherein the adhesive 31 includes distinct sections 33, 35, both sections 33 and 35 may have the same height or substantially the same height in the thickness direction of the of metal foil web material 1. The width of the first section 33 and the second section 35 of the adhesive 31 are substantially the same or exactly the same in the axial direction of the second supply roll 20. The border regions laterally adjacent the first section 33 and a second section 35 are preferably constant or substantially constant. The border regions laterally adjacent the first and second section 33, 35 are preferably of the same size or substantially the same size on both lateral sides. In particular, the border regions may be no more than 1 cm, in particular no more than 5 mm, preferably no more than 1 mm wide.

Fig. 8 shows a detailed schematic cross-section of the of metal foil web material 1 through the adhesion area. In the illustrated example, the adhesive 31 comprises a double-sided adhesive tape. Specifically, the adhesive 31 includes a first section 33 comprising a first double-sided adhesive tape and a second section 35 comprising a second double-sided adhesive tape. The adhesive tape includes a base layer 47 or matrix layer. The adhesive tape further includes sticky layers 41, 43 on each side of the base layer 47. The first sticky layer 41 is configured to provide a first adhesive force for holding the first portion 11 of the metal foil web material 1. The second sticky 43 layer is configured to provide a second adhesive force for holding the second portion 21 of the metal foil web material 1. The adhesive force of the first and second sticky layers 41, 43 of a respective adhesive tape may be the same or different. It may be preferred that the adhesive tape used in the first section 33 displays the same adhesion force or holding force at both sticky layers 41, 43. It may be preferred that the adhesive tape used in the second section 35 displays a larger adhesion force or holding force at the second stick layer 43 in comparison to the first sticky layer 41. The first adhesion force for holding the first portion 11 may be substantially larger in the first section 33 than in the second section 35. A strong adhesion force in the first section 33 may be 1000 gf/25 mm or more. A weak adhesion force in the second section may be 50 gf/ 25mm or less.

The first portion 11 of the metal foil web material 1 completely covers the first section 33. The second section is only partially covered by the first portion 11. A part of the second section 33 of the adhesive 31 is exposed by the first portion 1. The first portion 11 may be dimensioned to partially expose the adhesive 31 in the second section 35 behind the trailing end 19. Additionally, first portion 11 may be dimensioned to partially expose the adhesive 31 in the second section 35 behind the serrated edge 18 of the first portion 11. The gap 37 may be covered completely by the first portion 11. In case the first portion 11 has a serrated edge 18, part of the gap 37 may be exposed. The thickness of the adhesive 31 may be larger than the thickness of the metal foil in one or both of the first and second portions 11, 21.

Fig. 9 shows a schematic illustration of metal foil web material 1 wherein the first and second portions 11, 21 are firmly attached to one another in accordance with the description regarding Fig. 8. The first section 33 of the adhesive 31 attaches the first and second portions using a large adhesive force. The first portion 21 covers the first section 33 and gap 37 completely. The second section 35 I partially covered and partially exposed by the first portion 11 having a trailing end 19 with a serrated edge 18 arranged in the adhesion area of the second section 35 of the adhesive 31 supplied to the second portion 21.

Markers 51 may be arranged along one or both of the lateral edges of the metal foil web material 1. Markers may for example be provided in regular intervals, of for example 1000 mm. It may be preferred that one such marker is arranged at the leading end 22 and/or first section 33 of the second portion 21. Such markers may help to identify the location of the adhesive 31 especially after covering both sides of the metal foil web material 1 with an active material 3 to create an electrode web 2.

Prior to their attachment to the first portion 11, the adhesive tape may be covered with a release film.

Although preferred embodiments of the present disclosure have been described in detail above, the scope of the present disclosure is not limited thereto, and various modifications and improvements made by those skilled in the art using the basic concepts of the present disclosure, which are defined in the appended claims, also falls within the scope of the present disclosure.

### [Description of Reference Numerals]

- 1: metal foil web material
- 2: electrode web
- 3: active material layer
- 10: first supply roll
- 11: first portion
- 18: serrated edge
- 19: trailing end
- 20: second supply roll
- 21: second portion
- 22: leading end
- 30: combination tool
- 31: adhesive
- 33: first section
- 35: second section
- 37: gap
- 41: first sticky layer
- 43: second sticky layer
- 45: base layer
- 51: marker
- 100: machine
- 110: deflection pulleys
- 120: tensioning rollers
- 130: die coater
- 140: oven

## Claims

1. A method of processing metal foil web material into an electrode web, comprising the steps of
operating a die coater to coat the metal foil web material with an active material layer on the metal foil web material;
supplying a first portion of metal foil web material from a first supply roll to the die coater;
providing a second supply roll carrying a second portion of the metal foil web material;
providing an adhesive to the leading end of the second portion of the metal foil web material;
applying the leading end of the second portion of the metal foil web material to a section of the first portion of the metal foil web material such that the adhesive is sandwiched between the first and second portions of the metal foil web material; and
severing the first portion of metal foil web material from the first supply roll at or behind the adhesive.

2. The method of claim 1, further comprising the step of
providing the adhesive comprising a first section proximal to the leading end and a second section distal to the leading end, wherein the severing is performed at the second section.

3. The method of claim 2, wherein
a gap is provided separating the first section from the second section.

4. The method of claim 2 or 3, wherein:
an adhesive force for holding the first portion provided by the adhesive is weaker in the second section than in the first section.

5. The method according to one of the claims 2 to 4, wherein
the severing step and the application of the leading end of the second portion to the first portion are performed using a combined stamping and cutting tool.

6. The method of one of the preceding claims, wherein:
the die coater is operated to continuously coat active material onto the metal foil web material.

7. The method of claim 6, further comprising:
wherein a first die coater is operated to coat a first side of the metal foil web material, preferably the side of the metal foil web material on which the trailing end of the first portion formed by severing is arranged, wherein the first die coater is arranged downstream of the place where the second portion is attached to the first portion.

8. The method of claim 7, wherein:
a second die coater is operated to coat a second side of the metal foil web material, preferably the side of the metal foil web material on which the leading end of the second portion is arranged, wherein the second die coater is arranged downstream of the place where the second portion is attached to the first portion.

9. The method of claim 8, wherein:
the second side of the metal foil web material is coated with the active material after the first side of the metal foil web material is coated with the active material.

10. The method of one of the claims 6 to 9, wherein
the active material is coated over the adhesive, in particular directly onto the adhesive, on the first side of the metal foil web material.

11. The method of one of the preceding claims, wherein:
the first and second supply roll supply the same metal foil web material, in particular comprising or consisting of a copper-alloy and/or an aluminum-alloy.

12. The method of one of the preceding claims, wherein
the severing step is performed along a severing line crosswise, in particular at an angle between 60° and 120°, preferably at an angle between 80° and 100°, more preferably perpendicular, through the first portion with respect to the travel direction of the metal foil web material.

13. The method of one of the preceding claims, wherein
the severing step forms a serrated edge along the trailing end of the first portion.

14. The method of one of the preceding claims, wherein
the adhesive is provided to the side of the second portion of the metal foil web material facing radially outward on the second supply roll.

15. The method of one of the preceding claims, wherein
the adhesive is applied to the side of the first portion of the metal foil web material facing radially inward on the first supply roll.

16. The method of one of the preceding claims, wherein, subsequently to coating the active material layer onto the metal foil web material,
a part of the electrode web containing the adhesive is separated from the parts of the electrode web designated to be used as electrodes,
wherein the part includes the adhesive and no more than 15000 mm, in particular no more than 1500 mm, of metal foil web material trailing behind adhesive,
wherein the part is to be disposed of.

17. A machine configured for processing metal foil web material into an electrode web according to the method of one of the claims 1 to 16.

## Amended claims

### Amended claims in accordance with Rule 137(2) EPC.

1. A method of processing metal foil web material (1) into an electrode web (2), comprising the steps of
operating a die coater (130) to coat the metal foil web material (1) with an active material layer (3) on the metal foil web material (1);
supplying a first portion (11) of metal foil web material (1) from a first supply roll (10) to the die coater (130);
providing a second supply roll (20) carrying a second portion (21) of the metal foil web material (1);
providing an adhesive (31) to the leading end (22) of the second portion (21) of the metal foil web material (1);
applying the leading end (22) of the second portion (21) of the metal foil web material (1) to a section of the first portion (11) of the metal foil web material (1) such that the adhesive (31) is sandwiched between the first and second portions (11, 21) of the metal foil web material (1); and
severing the first portion (11) of metal foil web material (1) from the first supply roll (10) at or behind the adhesive (31).

2. The method of claim 1, further comprising the step of
providing the adhesive (31) comprising a first section (33) proximal to the leading end (22) and a second section (35) distal to the leading end (22), wherein the severing is performed at the second section (35).

3. The method of claim 2, wherein
a gap (37) is provided separating the first section (33) from the second section (35).

4. The method of claim 2 or 3, wherein:
an adhesive (31) force for holding the first portion (11) provided by the adhesive (31) is weaker in the second section (35) than in the first section (33).

5. The method according to one of the claims 2 to 4, wherein
the severing step and the application of the leading end (22) of the second portion (21) to the first portion (11) are performed using a combined stamping and cutting tool.

6. The method of one of the preceding claims, wherein:
the die coater (130) is operated to continuously coat active material onto the metal foil web material (1).

7. The method of claim 6, further comprising:
wherein a first die coater (130) is operated to coat a first side of the metal foil web material (1), preferably the side of the metal foil web material (1) on which the trailing end of the first portion (11) formed by severing is arranged, wherein the first die coater (130) is arranged downstream of the place where the second portion (21) is attached to the first portion (11).

8. The method of claim 7, wherein:
a second die coater (130) is operated to coat a second side of the metal foil web material (1), preferably the side of the metal foil web material (1) on which the leading end (22) of the second portion (21) is arranged, wherein the second die coater (130) is arranged downstream of the place where the second portion (21) is attached to the first portion (11).

9. The method of claim 8, wherein:
the second side of the metal foil web material (1) is coated with the active material after the first side of the metal foil web material (1) is coated with the active material.

10. The method of one of the claims 6 to 9, wherein
the active material is coated over the adhesive (31), in particular directly onto the adhesive (31), on the first side of the metal foil web material (1).

11. The method of one of the preceding claims, wherein:
the first and second supply roll (20) supply the same metal foil web material (1), in particular comprising or consisting of a copper-alloy and/or an aluminum-alloy.

12. The method of one of the preceding claims, wherein
the severing step is performed along a severing line crosswise, in particular at an angle between 60° and 120°, preferably at an angle between 80° and 100°, more preferably perpendicular, through the first portion (11) with respect to the travel direction of the metal foil web material (1).

13. The method of one of the preceding claims, wherein
the severing step forms a serrated edge (18) along the trailing end of the first portion (11).

14. The method of one of the preceding claims, wherein
the adhesive (31) is provided to the side of the second portion (21) of the metal foil web material (1) facing radially outward on the second supply roll (20).

15. The method of one of the preceding claims, wherein
the adhesive (31) is applied to the side of the first portion (11) of the metal foil web material (1) facing radially inward on the first supply roll (10).

16. The method of one of the preceding claims, wherein, subsequently to coating the active material layer (3) onto the metal foil web material (1),
a part of the electrode web (2) containing the adhesive (31) is separated from the parts of the electrode web (2) designated to be used as electrodes,
wherein the part includes the adhesive (31) and no more than 15000 mm, in particular no more than 1500 mm, of metal foil web material (1) trailing behind adhesive (31),
wherein the part is to be disposed of.

17. A machine (100) configured for processing metal foil web material (1) into an electrode web (2) according to the method of one of the claims 1 to 16, comprising:
a stamping tool configured to push the first portion (10) against the adhesive (31) arranged on the second portion (20) in an attachment area extending in a width direction and a length direction of the second portion (20) such that the adhesive (31) is sandwiched between the first and second portions (10, 20), and
a cutting tool configured to sever the first portion (10) in the attachment area.
